# EUROPÄISCHE PATENTSCHRIFT

(11) **EP 4 231 509 B1**
(45) Veröffentlichungstag und Bekanntmachung des Hinweises auf die Patenterteilung: **27.03.2024**
(21) Anmeldenummer: 22157518.6
(22) Anmeldetag: 18.02.2022
(51) Int. Cl.: H02K 15/14, H02K 5/06

(54) **STATORGEHÄUSE**
STATOR HOUSING
CARTER DE STATOR

(43) Veröffentlichungstag der Anmeldung: 23.08.2023
(73) Patentinhaber: Fischer & Kaufmann GmbH & Co. KG, 57413 Finnentrop (DE)
(72) Erfinder: SCHRÖDER, Daniel, 57413 Finnentrop (DE); DRIXELIUS, Georg, 57413 Finnentrop (DE); BEHRENDT, Carsten, 57413 Finnentrop (DE)
(74) Vertreter: Wunderlich & Heim Patentanwälte PartG mbB

(56) Entgegenhaltungen:
- WO-A1-2011/064098
- DE-A1- 1 958 771

## Beschreibung

Die Erfindung betrifft ein Verfahren zum Herstellen eines Statorgehäuses für einen Elektromotor, wobei das Statorgehäuse ein trommelförmiges Umfangsgehäuse und einen Radialring aufweist, welcher mit dem Umfangsgehäuse lösbar verbunden ist.

Ferner betrifft die Erfindung ein Statorgehäuse für einen Elektromotor mit einem trommelförmigen Umfangsgehäuse und einem Radialring.

Elektromotoren weisen einen Stator sowie einen sich in Bezug auf den Stator drehenden Rotor auf. Der Stator selbst wird oft in einem Statorgehäuse aufgenommen, das den Stator schützt und meist das Gehäuse für den gesamten Elektromotor ausbildet. Hierbei ist es wünschenswert, ein möglichst effizientes Verfahren zur Herstellung eines Statorgehäuses zu ermöglichen. Zu berücksichtigen ist jedoch, dass teilweise der Stator in das Statorgehäuse eingebaut werden muss und anschließend dieses wiederum verschlossen werden muss. Insofern ist eine zweiteilige Konstruktion notwendig, die meist ein Umfangsgehäuse sowie einen entsprechenden Abschluss aufweist.

Das Dokument DE 19 58 771 A1 offenbart ein Verfahren zum Herstellen von Metallteilen durch Tiefziehen.

Der Erfindung liegt die **Aufgabe** zugrunde, ein Verfahren zum Herstellen eines Statorgehäuses für einen Elektromotor sowie ein Statorgehäuse für einen Elektromotor anzugeben, welche effizient realisiert werden können.

Diese Aufgabe wird gemäß der Erfindung durch ein Verfahren zum Herstellen eines Statorgehäuses für einen Elektromotor mit den Merkmalen des Anspruchs 1 gelöst. Außerdem wird die Aufgabe durch ein Statorgehäuse für einen Elektromotor mit den Merkmalen des Anspruchs 10 gelöst.

Weiter vorteilhafte Ausführungsformen der Erfindung sind in den abhängigen Ansprüchen, der Beschreibung sowie in der Erläuterung der Figuren angegeben.

Entsprechend der Erfindung ist vorgesehen, dass das Statorgehäuse ein trommelförmiges Umgangsgehäuse und einen Radialring aufweist, welcher mit dem Umfangsgehäuse lösbar verbunden ist. Hierzu wird aus einem Ausgangsmaterial durch Umformen ein topfförmiges Werkstück mit einem Umfangswandabschnitt und einem Bodenabschnitt hergestellt. Es kann aber auch ein bereits ein topfförmiges Werkstück aus Ausgangsmaterial verwendet werden. Dann ist der Schritt des Umformens fakultativ. Der Bodenabschnitt wird von dem Umfangswandabschnitt getrennt. Aus dem, insbesondere bereist abgetrennten, Umfangswandabschnitt wird das trommelförmige Umfangswandgehäuse durch Umformen und/oder materialabtragendes Bearbeiten ausgebildet. Aus dem, insbesondere bereist abgetrennten, Bodenabschnitt wird durch Umformen und/oder materialabtragendes Bearbeiten der Radialring ausgebildet.

Grundsätzlich kann das Abrennen des Radialring vom topfförmigen Werkstück und so das Ausbilden des trommelförmige Umfangswandgehäuse vor oder nach der finalen Bearbeitung des Radialring und des trommelförmige Umfangswandgehäuse, beispielsweise mittels Umformens und/oder materialabtragendes Bearbeiten, erfolgen.

Entsprechend der Erfindung wurde erkannt, dass es nicht notwendig ist, für ein Statorgehäuse mit einem trommelförmigen Umfangsgehäuse und einem Radialring zwei separate Bauteile aus separaten Rohlingen zu fertigen. Nach der Erfindung ist vorgesehen, aus einem Rohling, der das Ausgangsmaterial liefert, durch Umformen zuerst ein topfförmiges Werkstück zu bilden. Anschließend wird aus diesem Werkstück der Bodenabschnitt abgetrennt. Durch die folgende Bearbeitung wird aus dem Bodenabschnitt der Radialring ausgebildet, wohingegen aus dem Umfangswandabschnitt das trommelförmige Umfangsgehäuse erzeugt werden kann. Es jedoch auch möglich das topfförmige Werkstück weiter umzuformen und erst späterden Radialring abzutrennen und somit auch das trommelförmigen Umfangsgehäuse auszubilden.

So kann das sonst im Rahmen der Herstellung des trommelförmigen Umfangsgehäuses überflüssiges Material, das als Schrott bezeichnet wird, verwendet werden. Dies bedeutet eine deutliche Materialeinsparung.

Bevorzugt ist es, wenn an einer axialen Stirnseite des trommelförmigen Umfangsgehäuses ein erstes Klauenprofil und an einer axialen Stirnseite des Radialrings ein zweites Klauenprofil ausgebildet wird. Dies kann beispielsweise durch Materialabtrag erfolgen. Das erste Klauenprofil und das zweite Klauenprofil sind zum Bilden einer Verbindung axial passend ineinandergreifend ausgeformt. Die beiden komplementären Klauenprofile ermöglichen so ein einfaches und dennoch sicheres Verbinden des trommelförmigen Umfangsgehäuses mit dem Radialring. Anders ausgedrückt, kann der Radialring so auf das trommelförmige Umfangsgehäuse aufgesetzt werden. Durch das Klauenprofil wird erreicht, dass hierbei ein sicherer Sitz vorhanden ist.

Grundsätzlich kann ein beliebiges Ausgangsmaterial verwendet werden. Vorteilhaft ist es jedoch, wenn als Ausgangsmaterial eine Blechronde verwendet wird, welche aus einem Blech ausgestanzt ist. Die Blechronde kann mit einem Mittelloch versehen sein.

Eine Blechronde, insbesondere mit einem Mittelloch, eignet sich entsprechend der Erfindung dazu, um durch Umformen das topfförmige Werkstück zu erzeugen.

Alternativ hierzu kann das Ausgangswerkstück auch ein Rohrstück oder ein Schmiederohling, insbesondere mit einer topfförmigen Grundform, sein, welches zu dem topfförmigen Werkstück umgeformt wird.

Grundsätzlich können verschiedene Verfahren zum Umformen verwendet werden. Bevorzugt ist es im Rahmen der Erfindung ein Tiefziehen, ein Absteckziehen, ein Drücken und/oder Drückwalzen beziehungsweise Kombinationen hiervon zu Umformen vorzusehen. Diese Verfahren bieten einen guten und effizienten Arbeitsablauf. Außerdem sind sie relativ effizient mit entsprechenden Werkmaschinen zu realisieren und erhöhen oft die Festigkeit des Materials. Bei dem Verwenden einer Blechronde kann zuerst ein Tiefziehen und dann ein Drückwalzen angewendet werden. Wird ein Schmiederohling mit einer topfförmigen Grundform verwendet, kann das Tiefziehen entfallen.

Generell kann ein beliebiges materialabtragendes Bearbeiten durchgeführt werden. Bevorzugt ist es jedoch, wenn ein Stanzen, ein Bohren, ein Fräsen, ein Drehen und/oder ein Laserschneiden angewandt wird. Selbiges gilt auch für Kombinationen hiervon. Diese Verfahren bieten sich insbesondere an, da sie relativ genau durchgeführt werden können.

Vorteilhafterweise wird der Radialring mit einem Axialabschnitt, der in axialer Richtung ausgerichtet ist, und mit einem Radialabschnitt ausgebildet, welcher in Radialrichtung nach innen ausgerichtet ist. Eine derartige Konstruktion ermöglicht es, an dem Radialabschnitt zusätzliche Befestigungsmöglichkeiten für den Stator oder weitere Bauteile vorzusehen. Diesbezüglich können an dem Radialabschnitt Haltelaschen, insbesondere durch Ausklinken ausgebildet werden, welche beispielsweise mit Befestigungslöchern versehen sind. Es ist aber alternativ oder zusätzlich auch möglich Befestigungslöchern direkt in dem Radialabschnitt vorzusehen und diesen entsprechend auszubilden.

Ferner betrifft die Erfindung ein Statorgehäuse für einen Elektromotor mit einem trommelförmigen Umfangsgehäuse und einem Radialring, welche axial zusammengesetzt und miteinander verbunden sind sowie aus einem topfförmigen Werkzeug durch Abtrennen gebildet sind. Dies geschieht insbesondere nach dem zuvor beschriebenen erfindungsgemäßen Verfahren.

Vorteilhaft ist es, wenn an einer axialen Stirnseite des trommelförmigen Umfangsgehäuses ein erstes Klauenprofil und an einer axialen Stirnseite des Radialrings ein zweites Klauenprofil ausgebildet sind, wobei das erste Klauenprofil und das zweite Klauenprofil zum Bilden einer Verbindung axial passend ineinandergreifen. Mittels des Vorsehens von korrespondierenden Klauenprofilen ist es möglich, das trommelförmige Umfangsgehäuse mit dem Radialring sicher zu verbinden. Anders ausgedrückt kann dieser auf das Umfangsgehäuse gesetzt werden. Mittels der Klauenverzahnung wird sichergestellt, dass zum einen die Position festgelegt ist und zum anderen kein Verdrehen auftritt.

Vorteilhafterweise weist ein radial gerichteter Radialabschnitt des Radialrings Haltelaschen auf, welche insbesondere mit Befestigungslöchern versehen sind. Mittels dieser Befestigungslöcher ist es möglich, wenn der Radialring auf das Umfangsgehäuse gesetzt wird, Teile des Stators oder andere Bauteile zu befestigen.

Die Erfindung wird nachfolgend anhand eines Ausführungsbeispiels und schematischen Zeichnungen näher erläutert. In diesen Zeichnungen zeigen:
- Fig. 1: ein erfindungsgemäßes Umfangsgehäuse,
- Fig. 2: einen erfindungsgemäßen Radialring;
- Figuren 3a bis 3d: einzelne Schritte beim Herstellen des erfindungsgemäßen Statorgehäuses aus einer Blechronde; und
- Figuren 4a bis 4c: einzelne Schritte beim Herstellen des erfindungsgemäßen Statorgehäuses aus einem Schmiederohling.

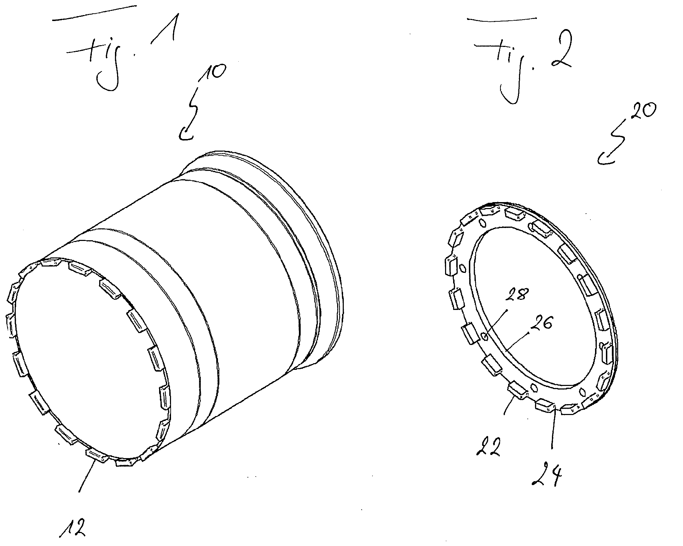

In Fig. 1 ist ein erfindungsgemäßes Umfangsgehäuse 10 und in Fig. 2 ein erfindungsgemäßer Radialring 20 dargestellt. Diese können zusammengesetzt werden und bilden dann ein Statorgehäuse für einen Elektromotor.

Das Umfangsgehäuse 10 weist eine trommelartige Form auf. An einem Ende ist eine Klauenverzahnung 12 vorgesehen. Die Klauen können im Wesentlichen gleich verteilt an einem Endbereich des Umfangsgehäuses 10 ausgebildet sein. Es sind aber auch unterschiedlich breite Einschnitte möglich. Dies ist nicht zwingend erforderlich, ermöglicht aber ein gezieltes zusammensetzen.

In Fig. 2 ist der erfindungsgemäße Radialring 20 gezeigt, der ein zweites Klauenprofil 22 an einem Axialabschnitt 24 aufweist. Dieses ist korrespondierend zu dem ersten Klauenprofil 12 ausgebildet. Dies bedeutet, dass der Radialring 20 auf das Umfangsgehäuse 10 aufgesetzt werden kann. Hierbei greifen die beiden Klauenprofile 12 und 22 ineinander ein, so dass ein sicherer Sitz vorhanden ist.

Der Radialring 20 weist ferner einen Radialabschnitt 26 auf. An diesem sind Befestigungslöcher 28 vorgesehen. Grundsätzlich sind jedoch auch Konstruktionen mit zusätzlichen Haltelaschen 27 oder mit anderen Befestigungsmöglichkeiten als die Befestigungslöcher 28 möglich. Im zusammengesetzten Zustand des Statorgehäuses kann mit den Befestigungslöchern 28 das Statorgehäuse an einem weiteren Bauteil befestigt werden. In ähnlicher Weise kann auch der Stator innerhalb des Gehäuses zusätzlich an dem Radialring angebracht werden.

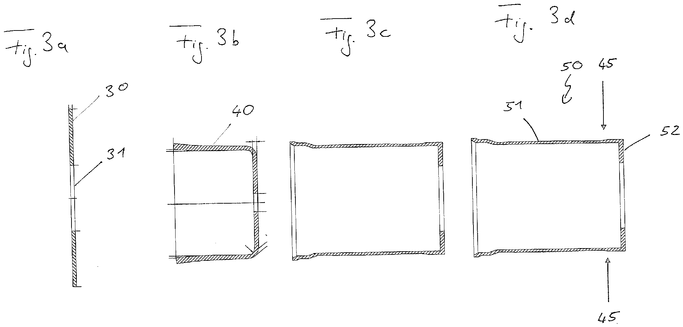

Im Folgenden wird unter Bezugnahme auf die Figuren 3a bis 3d das erfindungsgemäße Herstellungsverfahren des erfindungsgemäßen Statorgehäuses mit dem Umfangsgehäuse 10 und dem Radialring 20 aus einer Blechronde 30 näher erläutert. Hierbei ist das Werkstück jeweils im Querschnitt dargestellt.

In Fig. 3a ist die Blechronde 30 gezeigt, welche ein Mitteilloch 31 aufweist. Diese kann beispielsweise aus einem Blech ausgestanzt oder in anderer Weise aus diesem ausgeformt werden. Anschließend wird beispielweise mittels Tiefziehens ein Topf 40 ausgeformt. Alternativ zum Verwenden einer Blechronde 30 kann auch ein Rohrstück verwendet werden, welches durch entsprechendes Umformen in die Form des Topfes 40 umgeformt wird.

In einem weiteren Schritt, dessen Endergebnis in Fig. 3c dargestellt ist, wird die exakte Form mittels Drückwalzen erzeugt. Hierbei kann bereits das Statorgehäuse vorliegen, welches das Umfangsgehäuse 10 und den Radialring 20 aufweist. Beim Drückwalzen kommt es zu einem Kaltverformen und zu einer Materialverfestigung. Auch wird hierbei die Wandstärke verringert.

In Fig. 3d ist das Werkstück noch im einstückigen Zustand gezeigt. Aufgrund der Montage des Stators ist es jedoch bevorzugt, das Statorgehäuse zweiteilig auszubilden. Aus diesem Grund wird, wie in Fig. 3d verdeutlich und durch die Pfeile 45 angedeutet, das topfförmiges Werkstück 50 an den Pfeilen zweigeteilt. So entsteht ein Umfangswandabschnitt 51 sowie ein Bodenabschnitt 52. Die beiden Abschnitte entsprechen nach einer fakultativen Nachbearbeitung, beispielsweise durch Fräsen oder Glätten, dem Umfangsgehäuse 10 sowie dem Radialring 20.

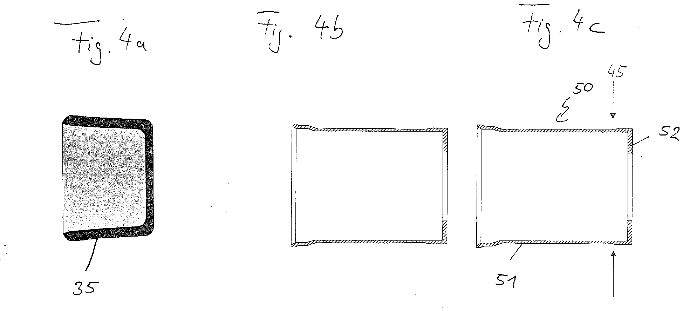

In den Figuren 4a bis 4c ist das erfindungsgemäße Herstellungsverfahren des erfindungsgemäßen Statorgehäuses mit dem Umfangsgehäuse 10 und dem Radialring 20 aus einem Schmiederohling 35 näher erläutert. Hierbei ist das Werkstück wie zuvor jeweils im Querschnitt dargestellt.

Der Schmiederohling 35 hat bereits eine topfförmige Grundform. Daher kann auf ein Tiefziehen, wie bei der Blechronde 30 notwendig, verzichtet werden und lediglich mittels Drückwalzen das Werkstück, wie in Fig. 4b dargestellt, umgeformt werden. Dieses gleicht dem Werkstück aus Fig. 3c. Wie weitere Bearbeitung ist daher analog zu der in Bezug auf die Figuren 3c und 3d beschriebenen Bearbeitung.

Mittels des erfindungsgemäßen Herstellungsverfahrens kann in einfacher und effizienter Weise ein Statorgehäuse gefertigt werden.

## Patentansprüche

1. Verfahren zum Herstellen eines Statorgehäuses für einen Elektromotor, wobei das Statorgehäuse ein trommelförmiges Umfangsgehäuse (10) und einen Radialring (20) aufweist, welcher mit dem Umfangsgehäuse (10) lösbar verbunden ist, wobei
aus einem Ausgangsmaterial durch fakultatives Umformen ein topfförmiges Werkstück (50) mit einem Umfangswandabschnitt (51) und einem Bodenabschnitt (52) hergestellt wird,
der Bodenabschnitt (52) von dem Umfangswandabschnitt (51) abgetrennt wird,
aus dem Umfangswandabschnitt (51) das trommelförmige Umfangsgehäuse (10) durch Umformen und/oder materialabtragendes Bearbeiten gebildet wird und
aus dem Bodenabschnitt (52) durch Umformen und/oder materialabtragendes Bearbeiten der Radialring (20) gebildet wird.

2. Verfahren nach Anspruch 1,
**dadurch gekennzeichnet,**
**dass** an einer axialen Stirnseite des trommelförmigen Umfangsgehäuses (10) ein erstes Klauenprofil (12) und an einer axialen Stirnseite des Radialrings ein zweites Klauenprofil (22), insbesondere durch Materialabtrag, ausgebildet werden, wobei das erste Klauenprofil und das zweite Klauenprofil (22) zum Bilden einer Verbindung axial passend ineinandergreifen.

3. Verfahren nach Anspruch 1 oder 2,
**dadurch gekennzeichnet,**
**dass** das Ausgangsmaterial eine Blechronde (30) ist, welche aus einem Blech ausgestanzt wird.

4. Verfahren nach Anspruch 3,
**dadurch gekennzeichnet,**
**dass** die Blechronde (309 mit einem Mittenloch (31) versehen wird.

5. Verfahren nach Anspruch 1 oder 2,
**dadurch gekennzeichnet,,**
**dass** das Ausgangswerkstück ein Rohrstück ist, welches zu dem topfförmigen Werkstück umgeformt wird.

6. Verfahren nach Anspruch 1 oder 2,
**dadurch gekennzeichnet,,**
**dass** das Ausgangswerkstück ein Schmiederohling, insbesondere mit einer topfförmigen Grundform ist.

7. Verfahren nach einem der Ansprüche 1 bis 6,
**dadurch gekennzeichnet,**
**dass** das Umformen ein Tiefziehen, Abstreckziehen, Drücken und/oder Drückwalzen umfasst.

8. Verfahren nach einem der Ansprüche 1 bis 7,
**dadurch gekennzeichnet,**
**dass** ein materialabtragendes Bearbeiten ein Stanzen, Bohren, Fräsen, Drehen und/oder Laserschneiden umfasst.

9. Verfahren nach einem der Ansprüche 1 bis 8,
**dadurch gekennzeichnet,**
**dass** der Radialring (20) mit einem Axialabschnitt (24), der in axialer Richtung gerichtet ist, und einem Radialabschnitt (26) gebildet wird, welcher in radialer Richtung nach innen gerichtet ist.

10. Verfahren nach Anspruch 9,
**dadurch gekennzeichnet,**
**dass** an dem Radialabschnitt (26) Haltelaschen, insbesondere durch Ausklinken, ausgebildet werden, und/oder
**dass** der Radialabschnitt (26) und/oder die Haltelaschen mit Befestigungslöchern (28) versehen werden.

11. Statorgehäuse für einen Elektromotor mit einem trommelförmigen Umfangsgehäuse (10) und einem Radialring (20), welche axial zusammengesetzt und miteinander verbunden sind sowie aus einem topfförmigen Werkstück (50) durch Abtrennen gebildet sind, nach einem Verfahren nach einem der Ansprüche 1 bis 10.

12. Statorgehäuse nach Anspruch 11,
**dadurch gekennzeichnet,**
**dass** an einer axialen Stirnseite des trommelförmigen Umfangsgehäuses (10) ein erstes Klauenprofil (12) und an einer axialen Stirnseite des Radialrings ein zweites Klauenprofil (22) ausgebildet sind, wobei das erste Klauenprofil (12) und das zweite Klauenprofil (22) zum Bilden einer Verbindung axial passend ineinandergreifen.

13. Statorgehäuse nach Anspruch 11 oder 12,
**dadurch gekennzeichnet,**
**dass** ein radial gerichteter Radialabschnitt (26) des Radialrings Haltelaschen (27) umfasst, welche insbesondere mit Befestigungslöchern (28) versehen sind.

## Claims

1. Method for producing a stator housing for an electric motor, wherein the stator housing comprises a drum-shaped peripheral housing (10) and a radial ring (20), which is connected to the peripheral housing (10) detachable,
wherein
a pot-shaped workpiece (50) having a peripheral wall section (51) and a bottom section (52) is produced from a starting material through optional forming,
the bottom section (52) is separated from the peripheral wall section (51),
the drum-shaped peripheral housing (10) is formed from the peripheral wall section (51) by forming and/or material removing processing and
the radial ring (20) is formed from the bottom section (52) by forming and/or material removal editing.

2. Method according to claim 1,
**characterized,**
**in that** a first claw profile (12) is formed on an axial end face of the drum-shaped peripheral housing (10) and a second claw profile (22) on an axial end face of the radial ring, in particular by material removal, wherein the first claw profile and the second claw profile (22) engages in a axially fitting manner to form a connection.

3. Method according to claim 1 or 2,
**characterized,**
**in that** the starting material is a sheet metal blank (30) which is punched out of sheet metal.

4. Method according to claim 3,
**characterized,**
**in that** the sheet metal blank (30) is provided with a center hole (31).

5. Method according to claim 1 or 2,
**characterized,**
**in that** the starting workpiece is a pipe section, which is formed into the cup-shaped workpiece.

6. Method according to claim 1 or 2,
**characterized,**
**in that** the starting workpiece is a forging blank, especially having a cup-shaped basic shape.

7. Method according to any one of claims 1 to 6,
**characterized,**
**in that** the forming includes deep drawing, ironing, metal spinning and/or roller spinning.

8. Method according to any one of claims 1 to 7,
**characterized,**
**in that** material removing processing includes punching, drilling, milling and turning and/or laser cutting.

9. Method according to any one of claims 1 to 8,
**characterized,**
**in that** the radial ring (20) is formed with an axial section (24) which is directed in the axial direction, and a radial section (26) which is directed inwards in radial direction.

10. Method according to claim 9,
**characterized,**
**in that** retaining tabs are formed on the radial section (26), in particular by notching, and/or
**in that** the radial section (26) and/or the retaining tabs are provided with fastening holes (28).

11. Stator housing for an electric motor having a drum-shaped peripheral housing (10) and a radial ring (20), which are axially assembled and connected to each other and are formed from a pot-shaped workpiece (50) by cutting off, in particular according to a method according to any one of the claims 1 to 10.

12. Stator housing according to claim 11,
**characterized,**
**in that** a first claw profile (12) ist formed on an axial end face of the drum-shaped peripheral housing (10) and a second claw profile (22) on an axial end face of the radial ring, wherein the first claw profile (12) and the second claw profile (22) engages in an axially fitting manner to form a connection.

13. Stator housing according to claim 11 or 12,
**characterized,**
**in that** a radially directed radial section (26) of the radial ring includes retaining tabs (27) which are provided, in particular with fastening holes (28).

## Revendications

1. Procédé de fabrication d'un carter de stator pour un moteur électrique, dans lequel le carter de stator présente un carter périphérique (10) en forme de tambour et un anneau radial (20) qui est relié de manière amovible au carter périphérique (10), dans lequel
une pièce à usiner (50) en forme de pot avec une section de paroi périphérique (51) et une section de fond (52) est fabriquée en un matériau de départ par formage facultatif, la section de fond (52) est séparée de la section de paroi périphérique (51), le carter périphérique (10) en forme de tambour est formé à partir de la section de paroi périphérique (51) par formage et/ou usinage par enlèvement de matériau et l'anneau radial (20) est formé à partir de la section de fond (52) par formage et/ou usinage par enlèvement de matériau.

2. Procédé selon la revendication 1,
**caractérisé en ce que**
un premier profil de griffe (12) est réalisé au niveau d'un côté frontal axial du carter périphérique (10) en forme de tambour et un second profil de griffe (22) est réalisé au niveau d'un côté frontal axial de l'anneau radial en particulier par enlèvement de matériau, dans lequel le premier profil de griffe et le second profil de griffe (22) s'engagent l'un dans l'autre de manière adaptée axialement pour la formation d'une liaison.

3. Procédé selon la revendication 1 ou 2,
**caractérisé en ce que**
le matériau de départ est un rond de tôle (30) qui est estampé dans une tôle.

4. Procédé selon la revendication 3,
**caractérisé en ce que**
le rond de tôle (309) est pourvu d'un trou central (31).

5. Procédé selon la revendication 1 ou 2,
**caractérisé en ce que**
la pièce à usiner de départ est une pièce tubulaire qui est formée pour obtenir la pièce à usiner en forme de pot.

6. Procédé selon la revendication 1 ou 2,
**caractérisé en ce que**
la pièce à usiner de départ est une ébauche forgée, en particulier avec une forme de base en forme de pot.

7. Procédé selon l'une quelconque des revendications 1 à 6,
**caractérisé en ce que**
le formage comprend un emboutissage profond, un étirage, un pressage et/ou un fluotournage.

8. Procédé selon l'une quelconque des revendications 1 à 7,
**caractérisé en ce que**
un usinage par enlèvement de matériau comprend un estampage, un forage, un fraisage, un tournage et/ou une découpe au laser.

9. Procédé selon l'une quelconque des revendications 1 à 8,
**caractérisé en ce que**
l'anneau radial (20) est formé avec une section axiale (24) qui est dirigée dans le sens axial, et une section radiale (26) qui est dirigée vers l'intérieur dans le sens radial.

10. Procédé selon la revendication 9,
**caractérisé en ce que**
des languettes de retenue sont réalisées au niveau de la section radiale (26), en particulier par encochage, et/ou
la section radiale (26) et/ou les languettes de retenue sont pourvues de trous de fixation (28).

11. Carter de stator pour un moteur électrique avec un carter périphérique (10) en forme de tambour et un anneau radial (20) qui sont assemblés et reliés entre eux axialement ainsi que formés à partir d'une pièce à usiner (50) en forme de pot par séparation, selon un procédé selon l'une quelconque des revendications 1 à 10.

12. Carter de stator selon la revendication 11,
**caractérisé en ce que**
un premier profil de griffe (12) est réalisé au niveau d'un côté frontal axial du carter périphérique (10) en forme de tambour et un second profil de griffe (22) est réalisé au niveau d'un côté frontal axial de l'anneau radial, dans lequel le premier profil de griffe (12) et le second profil de griffe (22) s'engagent l'un dans l'autre de manière adaptée axialement pour la formation d'une liaison.

13. Carter de stator selon la revendication 11 ou 12,
**caractérisé en ce que**
une section radiale (26) dirigée radialement de l'anneau radial comprend des languettes de retenue (27) qui, en particulier, sont pourvues de trous de fixation (28).
